# EUROPEAN PATENT APPLICATION

(11) **EP 2 437 487 A1**
(43) Date of publication of application: **04.04.2012**
(21) Application number: 11166177.3
(22) Date of filing: 16.05.2011
(51) Int. Cl.: H04N 5/445, H04N 5/76, H04N 5/782

(54) **Recording-reservation setting apparatus and recording-reservation setting method**

(30) Priority: 30.09.2010 JP 2010222808
(71) Applicant: Kabushiki Kaisha Toshiba, Tokyo 105-8001 (JP)
(72) Inventor: Kuwahara, Kazuki, Tokyo 105-8001 (JP)
(74) Representative: HOFFMANN EITLE

(57) **Abstract**

According to one embodiment, the recording reservation setting apparatus includes a creation unit (23c), a setting unit (23c), and a recording unit (12 to 16, 23, 27). The creation unit (23c) is configured to create a recording reservation screen (32) displayed in the form of a matrix with an axis (32a) along which days are arrayed and another axis (32b) which represents time divided into predetermined time bands. The setting unit (23c) is configured to set a recording reservation for a day and a time band corresponding to a unit area (32c), by selecting the unit area (32c) specified by the day and the time band on the recording reservation screen (32) created by the creation unit (23c). The recording unit (12 to 16, 23, 27) is configured to receive and simultaneously record programs distributed through a plurality of channels, based on the recording reservation set by the setting unit (23c).

## Description

Embodiments described herein relate generally to a recording-reservation setting apparatus and a recording-reservation setting method which are suitable for simultaneous multi-channel recording.

As is well known, in recent years digital television broadcast receiving apparatuses which internally comprise a digital recorder such as a hard disk drive (HDD), receive digital television broadcasts, and make broadcast programs thereof recordable have become well known. In broadcast receiving apparatuses of this type, a storage volume of the internal digital recorder is dramatically increasing year by year.

Among broadcast receiving apparatuses which internally comprise a digital recorder having such a large capacity, a broadcast receiving apparatus which comprises a so-called simultaneous-multi-channel recording function has now appeared, which allows a user to specify a plurality of channels and the receiving apparatus to receive and simultaneously record programs broadcasted on the plurality of channels specified.

The technology for achieving the simultaneous multi-channel recording is still under development, and there is yet room for development in details at present. Particularly, when simultaneous multi-channel recording is carried out through a recording reservation, an operation of setting the recording reservation is demanded to be simplified to provide convenient handling for users.

A general architecture that implements the various features of the embodiments will now be described with reference to the drawings. The drawings and the associated descriptions are provided to illustrate the embodiments and not to limit the scope of the invention.
FIG. 1 is a block diagram for explaining schematically an example of a signal processing system in a digital-television broadcast receiving apparatus according to one embodiment;
Fig. 2 is an exterior view for explaining an example of a remote controller for use in the digital-television broadcast receiving apparatus according to the embodiment;
FIG. 3 is a view for explaining an example of a channel select screen displayed by the digital television broadcast receiving apparatus according to the embodiment;
FIG. 4 is a view for explaining an example of a simultaneous-multi-channel-recording reservation screen displayed by the digital television broadcast receiving apparatus according to the embodiment;
FIG. 5 is another view for explaining an example of a recording reservation in units of cells, using the simultaneous-multi-channel-recording screen according to the embodiment;
FIG. 6 is a flowchart for explaining an example of a recording reservation operation in units of cells, using the simultaneous-multi-channel-recording screen according to the embodiment;
FIG. 7 is a view for explaining an example of a recording reservation in units of days, using the simultaneous-multi-channel-recording screen according to the embodiment;
FIG. 8 is another view for explaining the example of a recording reservation in units of days, using the simultaneous-multi-channel-recording screen according to the embodiment;
FIG. 9 is a flowchart for explaining an example of a recording reservation operation in units of days, using the simultaneous-multi-channel-recording screen according to the embodiment;
FIG. 10 is a view for explaining an example of a recording reservation in units of unit time bands, using the simultaneous-multi-channel-recording screen according to the embodiment;
FIG. 11 is another view for explaining the example of a recording reservation in units of unit time bands, using the simultaneous-multi-channel-recording screen according to the embodiment;
FIG. 12 is a flowchart for explaining an example of a recording reservation operation in units of unit time bands, using the simultaneous-multi-channel-recording screen according to the embodiment;
FIG. 13 is a view for explaining an example of a recording reservation by selecting all cells, using the simultaneous-multi-channel-recording screen according to the embodiment;
FIG. 14 is another view for explaining the example of a recording reservation by selecting all cells, using the simultaneous-multi-channel-recording screen according to the embodiment;
FIG. 15 is a flowchart for explaining an example of a recording reservation operation by selecting all cells, using the simultaneous-multi-channel-recording screen according to the embodiment;
FIG. 16 is a view for explaining an example of a copy processing in units of days, using the simultaneous-multi-channel-recording screen according to the embodiment;
FIG. 17 is another view for explaining the example of a copy processing in units of days, using the simultaneous-multi-channel-recording screen according to the embodiment;
FIG. 18 is a view for explaining an example of a copy processing in units of unit time bands, using the simultaneous-multi-channel-recording screen according to the embodiment; and
FIG. 19 is another view for explaining the example of a copy processing in units of unit time bands, using the simultaneous-multi-channel-recording screen according to the embodiment.

Various embodiments will be described hereinafter with reference to the accompanying drawings. In general, according to one embodiment, a recording-reservation setting apparatus comprises a creation unit, a setting unit, and a recording unit. The creation unit is configured to create a recording reservation screen displayed in the form of a matrix with an axis along which days of the week are arrayed and another axis which represents time divided for each predetermined unit time band. The setting unit is configured to set a recording reservation by selecting a unit area specified by a day and a unit time band on the recording reservation screen created by the creation unit. The recording unit is configured to receive and simultaneously record programs distributed through a plurality of channels, based on the recording reservation which is set by the setting unit.

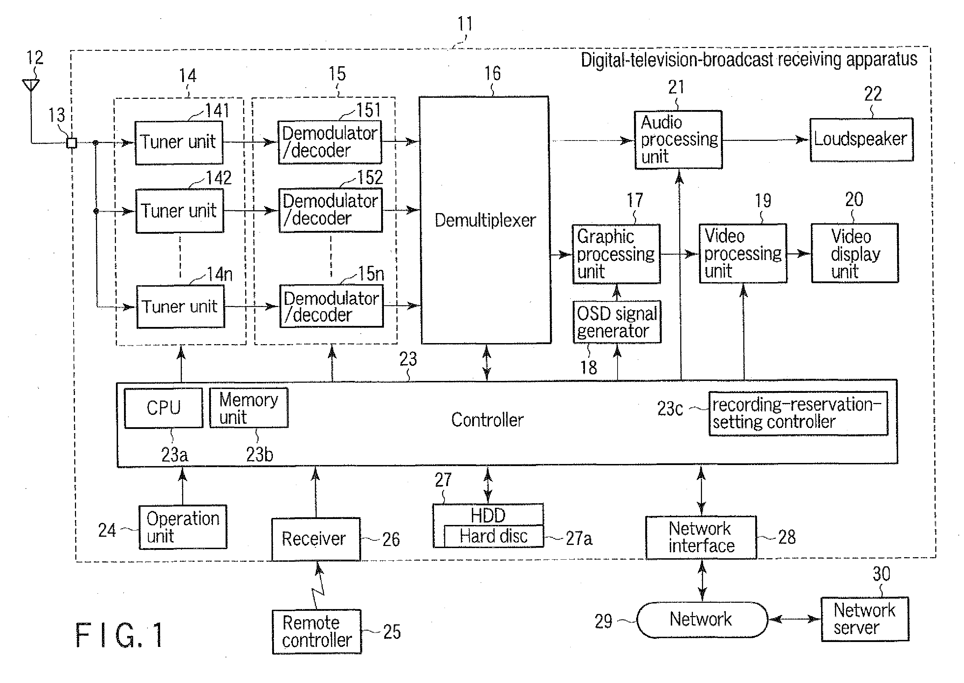

FIG. 1 schematically shows a signal processing system of a digital-television-broadcast receiving apparatus 11 described in the present embodiment. The digital-television-broadcast receiving apparatus 11 has a function to receive and simultaneously record programs which are broadcasted on a plurality of channels.

Specifically, digital-television broadcast signals received by an antenna 12 are supplied through an input terminal 13 to n tuner units 141, 142, ..., 14n which form a tuner processing unit 14. The tuner units 141 to 14n each tune a broadcast signal of a desired channel from the input digital television signals.

The broadcast signals tuned by the tuner units 141, 142, ..., 14n are supplied to respectively corresponding demodulator/decoders 151, 152, ..., 15n which form a demodulation/decoding processing unit 15. The demodulator/decoders 151 to 15n each decode data of videos and audio concerning broadcast programs from the input broadcast signals.

Thereafter, data of programs and program information reproduced by the demodulator/decoders 151 to 15n are supplied to a demultiplexer 16. The demultiplexer 16 selects data of one program from the data of the programs input, and separates the selected data of one program into video data and audio data.

Of the separated data, the video data output from the demultiplexer 16 is supplied to a graphic processing unit 17. On the video data supplied from the demultiplexer 16, the graphic processing unit 17 superimposes an OSD signal generated from an on-screen-display (OSD) signal generator 18, and outputs a superimposed result to a video processing unit 19.

The video processing unit 19 converts input video data into a format displayable by a flat video display unit 20 used in a later processing, which comprises, for example, a liquid crystal display panel. A video signal output from the video processing unit 19 is supplied to the video display unit 20 and is displayed as a video.

The demultiplexer 16 can output items of video data respectively supplied from the demodulator/decoders 151 to 15n, in combination with each other to achieve so-called multi-screen display, by simultaneously displaying the items of video data respectively on a plurality of areas into which a screen of the video display unit 20 is divided.

Audio data output from the demultiplexer 16 is supplied to an audio processing unit 21. The audio processing unit 21 converts the input audio data into a format which is audibly reproducible by a loudspeaker 22 used in a later processing. Further, an audio signal output from the audio processing unit 21 is supplied to the loudspeaker 22 and reproduced as audio.

All operations of the digital-television-broadcast receiving apparatus 11 are totally controlled by a controller 23, including various receiving operations described above. The controller 23 internally comprises a central processing unit (CPU) 23a. The controller 23 receives operation information from an operation unit 24 or operation information which is sent from a remote controller 25 and received by a receiver 26, and controls various units so as to reflect the content of operations.

In this case, the controller 23 uses a memory unit 23b. The memory unit 23b comprises a read only memory (ROM), a random access memory (RAM), and a non-volatile memory. The ROM stores control programs executed by the CPU 23a. The RAM provides a work area for the CPU 23a. The non-volatile memory stores various setting information and control information.

The controller 23 is connected to a HDD 27. The controller 23 obtains, from the demultiplexer 16, data of a video or audio concerning a broadcast program on a channel specified by a user, based on a user's operation on the operation unit 24 or remote controller 25 or based on a preset recording reservation. The controller 23 supplies the obtained data to the HDD 27, and controls the HDD 27 to record the data into a hard disc 27a.

Also, based on a user's operation on the operation unit 24 and remote controller 25 or based on a preset recording reservation, the controller 23 obtains, from the demultiplexer 16, data of videos and audio concerning broadcast programs on a plurality of channels specified by a user. The controller 23 supplies the data to the HDD 27 and controls the HDD 27 to simultaneously record the data. The controller 23 can thus achieve a so-called simultaneous-multi-channel recording function.

The controller 23 can control the HDD 27 to read data of a video and audio concerning a desired program, based on a user's operation on the operation unit 24 or remote controller 25, and supplies the data to the demultiplexer 16. Thereafter, the data can be subjected to video display and audio reproduction.

The controller 23 is further connected to an external network 29 through a network interface 28. The controller 23 therefore can access a network server 30 on a network 29, based on a user's operation on the operation unit 24 or remote controller 25, and can utilize various services provided by the network server 30.

The controll unit 23 described above obtains program information concerning programs which are broadcasted on all receivable channels, from services which are obtained through digital television broadcasts and the network 29. The controll unit 23 controls the hard disc 27a to record the program information into the hard disc 27a. The program information is used to provide users with detailed information of the programs, create an electronic program guide, or set recording reservations inclduing simultaneous multi-channel recording.

The controller 23 comprises a recording-reservation setting controller 23c. The recording-reservation setting controller 23c has a function to assist the user to easily carry out an operation of setting a recording reservation of simultaneous multi-channel recording, on a screen of a video display unit 20, when simultaneous multi-channel recording is reserved.

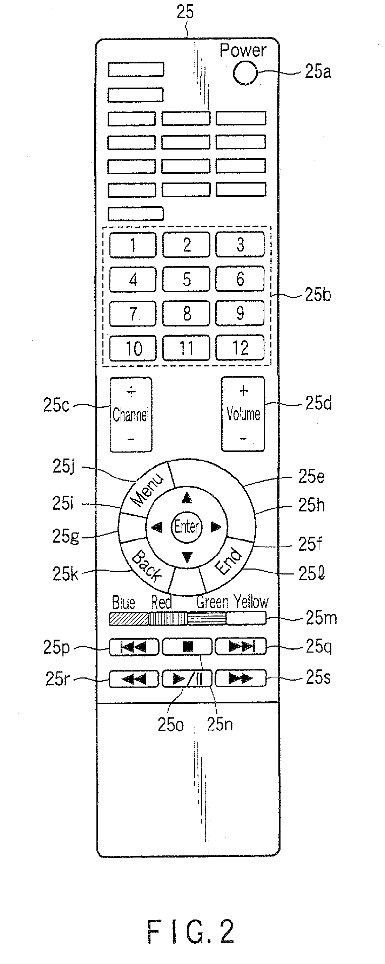

FIG. 2 shows an exterior of the remote controller 25. The remote controller 25 is substantially provided with a power supply key 25a, numeric keys 25b, a channel up/down key 25c, a volume control key 25d, a cursor up key 25e, a cursor down key 25f, a cursor left key 25g, a cursor right key 25h, an enter key 25i, a menu key 25j, a back key 25k, an end key 251, and four color (blue, red, green, and yellow) keys 25m.

The remote controller 25 is further provided with a play/stop key 25n, a play/pause key 25o, a reverse skip key 25p, a forward skip key 25q, a quick reverse key 25r, and a quick forward key 25s.

That is, the HDD 27 can be made to play back, stop, and pause data by operating the play/stop key 25n and play/pause key 25o of the remote controller 25.

By operating the reverse skip key 25p and forward skip key 25q of the remote controller 25, so-called reverse and forward skips can be achieved, i.e., data of videos and audio which the HDD 27 reads from the hard disc 27a can be skipped by a constant amount in reverse and forward directions relative to a playback direction of the data.

Further, by operating the quick reverse key 25r and quick forward key 25s of the remote controller 25, so-called quick reverse and forward playback can be achieved, i.e., data of videos and audio which the HDD 27 reads from the hard disc 27a can be reproduced in reverse and forward directions relative to a playback direction of the data.

With respect to the digital-television-broadcast receiving apparatus 11 configured as described above, a setting for a recording reservation of simultaneous multi-channel recording will now be described below. Described first will be a processing which allows the user to register a plurality of channels to tune for performing simultaneous multi-channel recording.

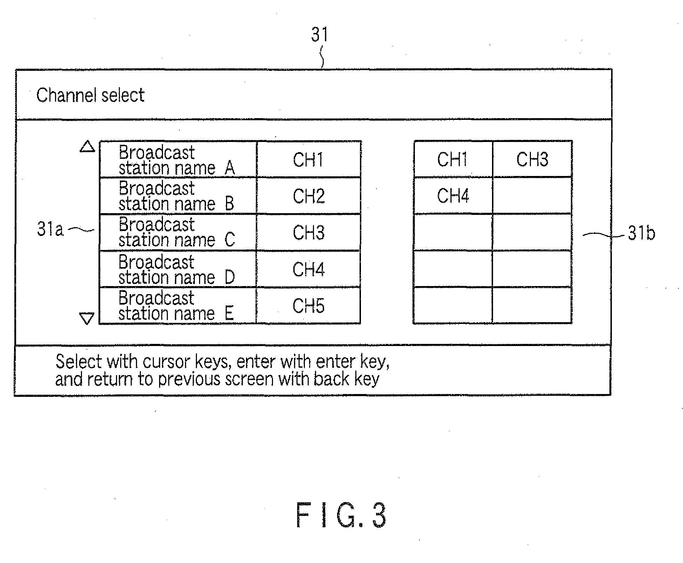

The processing is performed when the user makes the video display unit 20 display a channel select screen 31 as shown in FIG. 3 by operating the menu key 25j of the remote controller 25 to enter a plurality of types of menu screens configured in a hierarchical structure. The channel select screen 31 shows a selectable-channel display area 31a and a registered-channel display area 31b.

Of the areas, the selectable-channel display area 31a displays at most five receivable channels with broadcast station names and channel numbers thereof at one time. All the receivable channels can be displayed as the user scrolls up or down the displayed channels on the screen by operating the cursor up key 25e or down key 25f.

The user selects a desired channel from the selectable-channel display area 31a by operating the cursor up key 25e or down key 25d of the remote controller 25, and then operates the enter key 25i. The channel is then registered as one of channels which are to be tuned in simultaneous multi-channel recording. Channel numbers of registered channels are shown in the registered-channel display area 31b.

The registered-channel display area 31b can display channel numbers corresponding in number to the tuner units 141 to 14n. Further, channels at the channel numbers shown in the registered-channel display area 31b are tuned in simultaneous multi-channel recording, and broadcast programs on the channels are recorded.

When the user operates the enter key 25i with any of channel numbers selected among the channel numbers shown in the registered-channel display area 31b by selectively operating the cursor up, down, left, and right keys 25e to 25h, the selected channel is then deleted from the registered-channel display area 31b. Registration of the channel as a channel to be tuned in simultaneous multi-channel recording is cancelled.

Described next will be a processing for setting a recording reservation of simultaneous multi-channel recording where a plurality of channels to tune in the simultaneous multi-channel recording have been set as described above. This processing is executed based on a control of the recording-reservation-setting controller 23c described above.

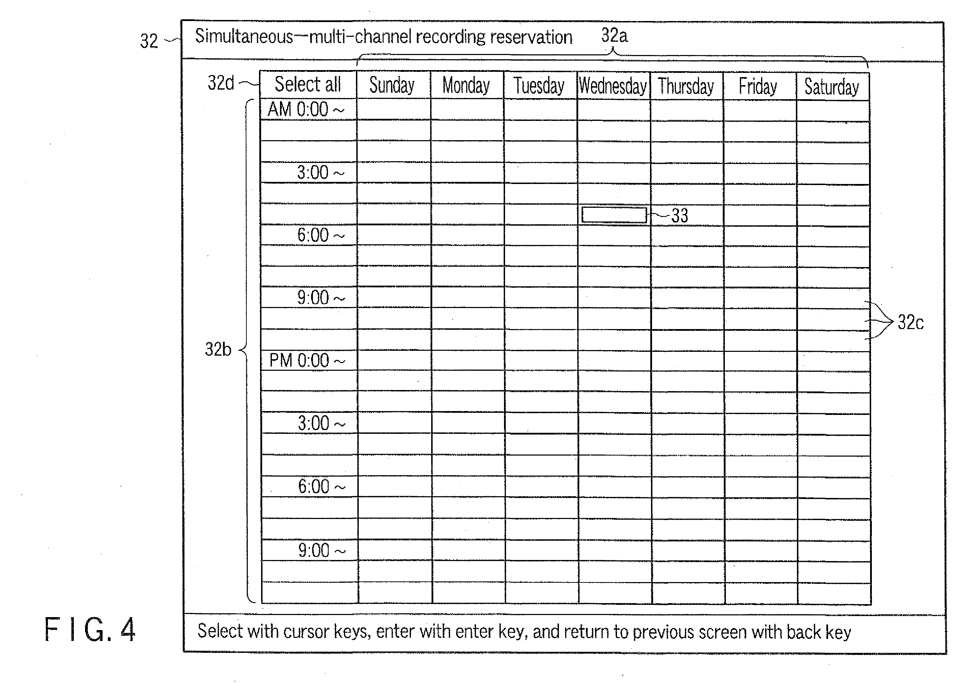

That is, the processing for setting a recording reservation of simultaneous multi-channel recording is performed when the user makes the video display unit 20 display a simultaneous-multi-channel recording screen 32 as shown in FIG. 4 by operating the menu key 25j of the remote controller 25 to enter a plurality of types of menu screens configured in a hierarchical structure.

The simultaneous-multi-channel-recording reservation screen 32 is created by the recording-reservation-setting controller 23c and is a so-called matrix table which shows a day area 32a along a horizontal axis and a time area 32b along a vertical axis. Of the areas, the day area 32a shows seven days of Sunday, Monday, Tuesday, ..., Saturday arrayed from the left to the right in the figure. The time area 32b shows a time range of 24 hours from 0:00 a.m. divided into predetermined unit time bands (each of which corresponds to one hour in the example of FIG. 4) arrayed from the top to the bottom in the figure.

The simultaneous-multi-channel-recording reservation screen 32 shows unit areas, namely, cells 32c respectively at positions specified by the days (seven) shown in the day area 32a and unit time bands (twenty four) shown in the time area 32b. There are a total of 7 x 24 = 168 cells 32c. The simultaneous multi-channel recording reservation screen 32 further shows a select all area 32d.

On the simultaneous-multi-channel-recording reservation screen 32, a cursor 33 is displayed on an arbitrary cell (e.g., a cell corresponding to six a.m. Wednesday in FIG. 4). The cursor 33 can be moved to another cell 32c when the user selectively operates the cursor up, down, left, and right keys 25e to 25h of the remote controller 25. That is, a desired cell 32c can be selected by a user's operation.

As shown in FIG. 4, the user operates the enter key 25i of the remote controller 25 with a desired cell 32c (corresponding to six a.m. Wednesday) selected by the cursor 33. That is, a desired cell 32c is selected. A recording reservation of simultaneous multi-channel recording is thereby set for the day and unit time band (six a.m. Wednesday) corresponding to the cell 32c.

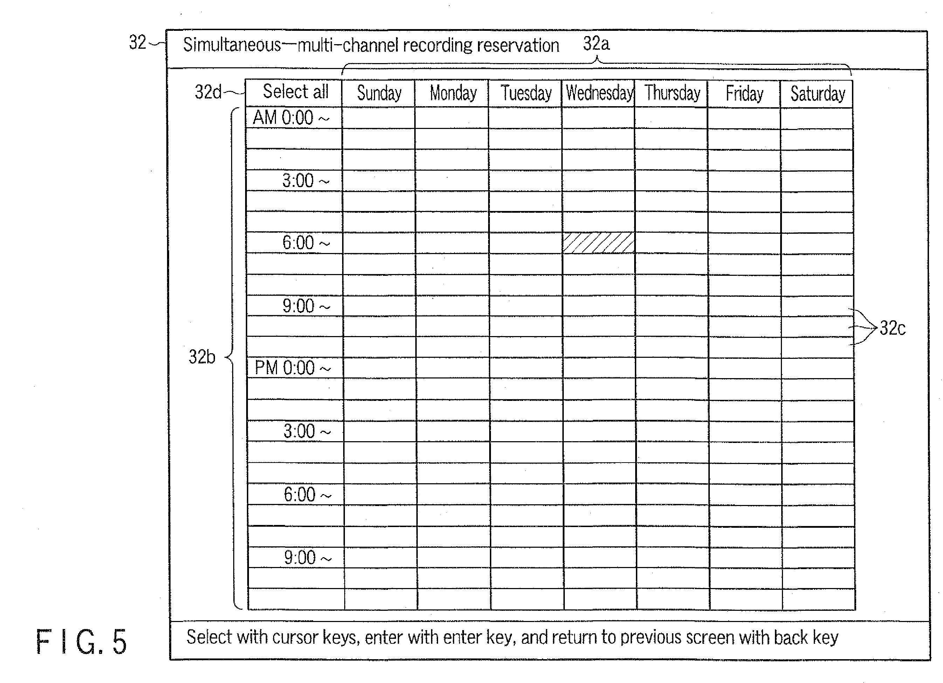

In this caes, the cell 32c corresponding to the day and unit time band for which the recording reservation has been set is displayed in a color (hatched in FIG. 5) indicating that the recording reservation has been set, as shown in FIG. 5, and is thus distinguishable from the other cells 32c.

In this manner, when recording start data/time specified by the recording reservation comes, i.e., when six a.m. Wednesday comes, the recording-reservation-setting controll unit 23c performs a control to simultaneously tune the channels regisred on the channel select screen 31 described above and to simultaneously record broadcast programs on the channels. Further, when a recording period, namely, one hour passes from six a.m. Wednesday, the simultaneous recording is stopped on each of the channels, and the simultaneous multi-channel recording of the recording reservation at the cell 32c is thereby completed.

The recording reservation of simultaneous multi-channel recording in units of cells 32c as described above is not limited to one cell 32c in one unit time band on one day. However, the user can set a recording reservation even in a plurality of unit time bands on a plurality of days by repeating an operation of selecting a desired cell 32c by the remote controller 25.

With respect to a cell 32c displayed in the color indicating that a recording reservation has been set, like the cell 32c hatched in FIG. 5, or namely, a cell 32c corresponding to a day and a unit time band for which a recording reservation has been set, the user can cancel the recoding reservation, as shown in FIG. 4, by selectively operating the cursor up, down, left, and right keys 25e to 25h and by further operating the enter key 25i. Then, the cell 32c corresponding to the day and unit time band for which the recording reservation has been cancelled is displayed in an original color indicating that no recording reservation is set.

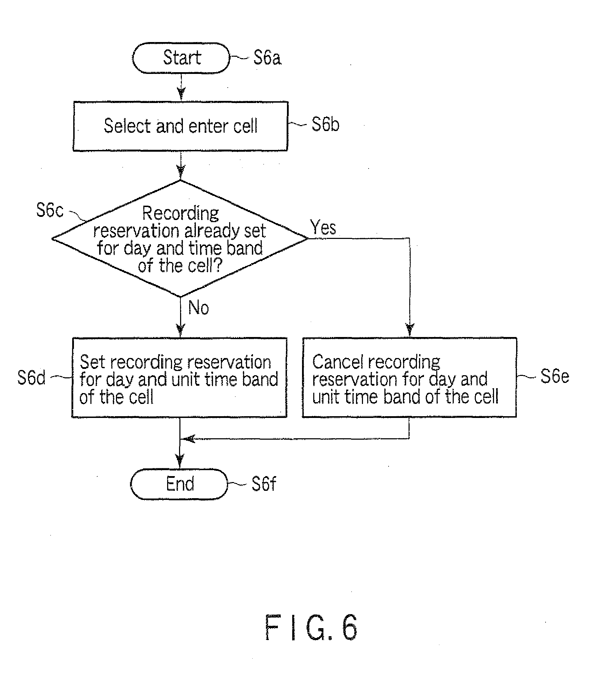

FIG. 6 shows a flowchart which summarizes a processing operation for setting and cancelling a recording reservation of simultaneous multi-channel recording in units of cells 32c as described above. Specifically, the processing is started (step S6a), and in step S6b, the user selects and enters a desired cell 32c. Then in step S6c, the recording-reservation-setting controll unit 23c determines whether a recording reservation has already been set for a day and a unit time band corresponding to the desired cell 32c or not.

If no recording reservation is determined to have been set for the day and unit time band corresponding to the cell 32c (NO), the recording-reservation-setting controll unit 23c sets a recording reservation for the day and unit time band corresponding to the cell 32c in step S6d, and terminates the processing (step S6f).

Otherwise, if a recording reservation is determined in the step S6c to have been set for the day and unit time band corresponding to the cell 32c (YES), the recording-reservation-setting controll unit 23c cancels the recording reservation set for the day and unit time band corresponding to the cell 32c in step S6e, and terminates the processing (step S6f).

According to the example of setting a recording reservation as described with reference to FIGS. 4, 5, and 6, a recording reservation for a day and a unit time band corresponding to a cell 32c can be set and cancelled by selecting and entering the cell 32c specified by the day and unit time band. That is, the user can easily set and cancel recording reservations while seeing states of recording reservations set throughout one week on the display screen. Accordingly, recording reservations of simultaneous multi-channel recording can be achieved with a high degree of freedom by an easy operation, and handling becomes convenient for users.

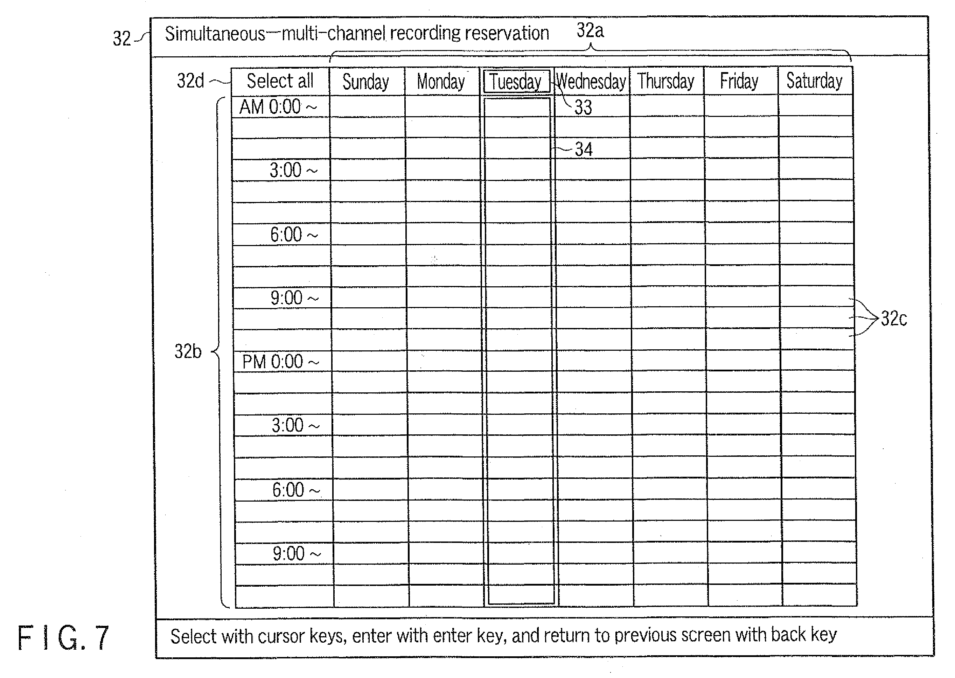

Next, on the simultaneous multi-channel recording reservation screen 32 described above, the user can move the cursor 33 to a desired one (Wednesday in FIG. 7) of seven days of the week displayed on the day area 32a by selectively operating the cursor up, down, left, and right keys 25e to 25h of the remote controller 25, as shown in FIG. 7. That is, a desired day can be selected by a user's operation.

In this case, all cells 32c corresponding to the day (Wednesday) selected by the cursor 33, namely, twenty four cells 32c respectively representing unit time bands for twenty four hours can be selected by one select frame 34. When the user operates the enter key 25i of the remote controller 25 in this state, a recording reservation of simultaneous multi-channel recording is set for the day (Wednesday) and unit time bands (24 hours from 0.00 a.m.) corresponding to the cells 32c selected by the select frame 34.

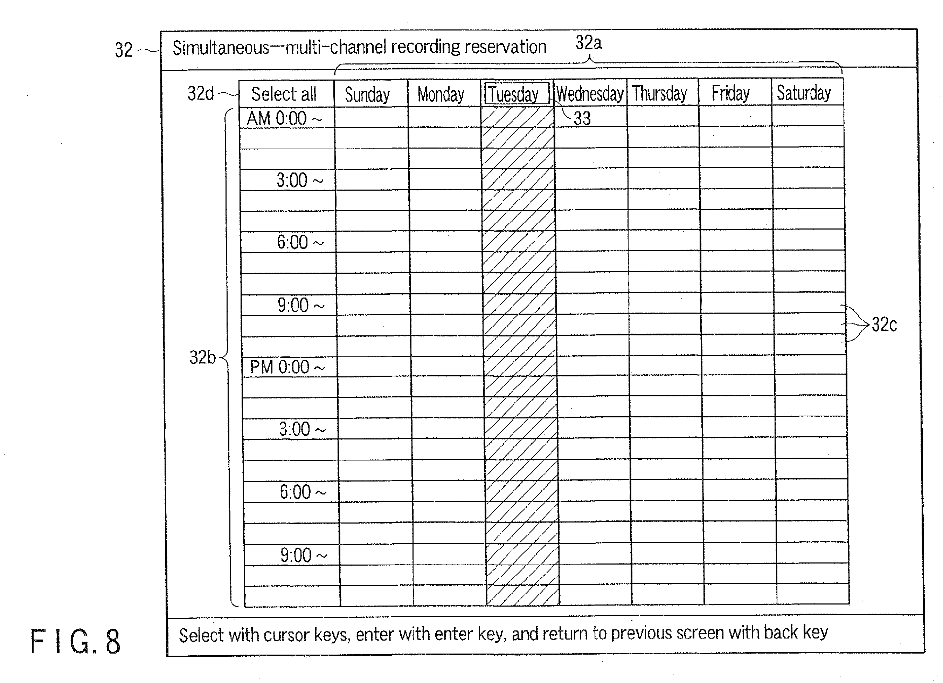

Also in this case, the cells 32c corresponding to the day and unit time bands for which the recording reservation has been set are displayed in the color (hatched in FIG. 8) indicating that a recording reservation has been set, as shown in FIG. 8, to be disitnguishable from the other cells 32c.

That is, the user can set a recording reservation for all unit time bands (24 hours from 0:00 a.m.) for a desired day by selecting the desired day by the remote controller 25.

The user can set a recording reservation of multi-channel recording in units of days as described above not only for one of seven days but also for a plurality of days by repeating the operation of selecting a desired day by the remote controller 25.

There is a case that unit time bands for which a recording reservation has been set (e.g., cells 32c displayed in a color representing a recording reservation set) and unit time bands for which no recording reservation is set (e.g., cells 32c displayed in a color representing no recording reservation set) exist mixed in a day selected by the cursor 33. In this case, when the enter key 25i of the remote controller 25 is operated, a recording reservation is set for all of those unit time bands. Specifically, twenty four cells 32c corresponding to all unit time bands on the selected day are displayed in the color indicating that a recording reservation has been set.

Further, with use of the remote controller 25, the user can select, by the cursor 33, a day for which cells 32c corresponding to all unit time bands are displayed in the color indicating that a recording reservation has been set, namely, a day for which a recording reservation has already been set for all the unit time bands on the day, as indicated by the hatching in FIG. 8. The user can then operate the enter key 25i.

Then, as shown in FIG. 7, the recording reservation can be cancelled for all the unit time bands on the day. The cells 32c corresponding to all the unit time bands on the day for which the recording reservation has been cancelled are then displayed in an original color indicating that no recording reservation is set.

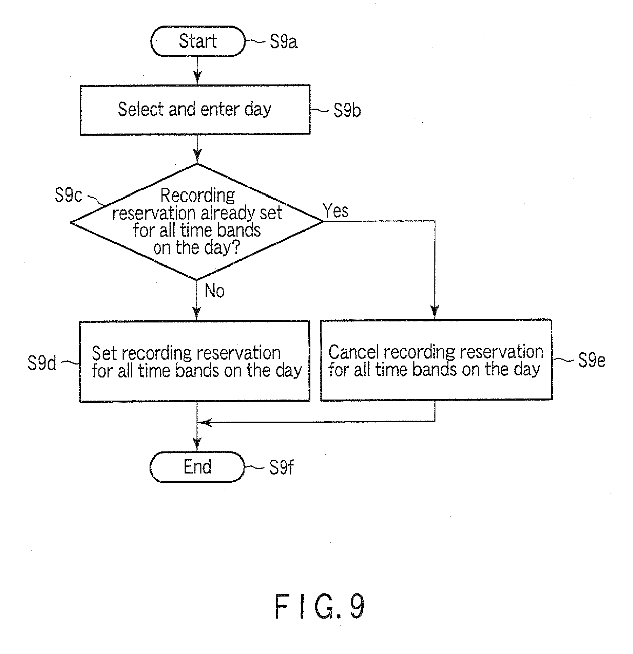

FIG. 9 shows a flowchart which summarizes a processing operation for setting and cancelling a recording reservation of simultaneous multi-channel recording in units of days as described above. Specifically, the processing is started (step S9a), and a desired day is selected and entered in step S9b by the user. Then in step S9c, the recording-reservation-setting controll unit 23c described above determines whether a recording reservation has already been set for all the unit time bands corresponding to the day or not.

If no recording reservation is determined to have been set for any of all the unit time bands corresponding to the day (NO), the recording-reservation-setting controll unit 23 sets a recording reservation for all the unit time bands corresponding to the day (step S9d) and terminates the processing (step S9f). Otherwise, if any recording reservation is determined to have been set for all unit time bands corresponding to the day in the step S9c (YES), the recording-reservation-setting controll unit 23c cancels the recording reservation set for all the unit time bands corresponding to the day, in step S9e, and terminates the processing (step S9f).

According to the setting example as described with reference to FIGS. 7, 8, and 9, a recording reservation can be set and cancelled for all the unit time bands corresponding to a desired day by selecting and entering the desired day. Therefore, a recording reservation can be easily set and cancelled. Accordingly, a recording reservation of simultaneous multi-channel recording can be set and cancelled with a high degree of freedom by an easy operation, and handling becomes convenient for users.

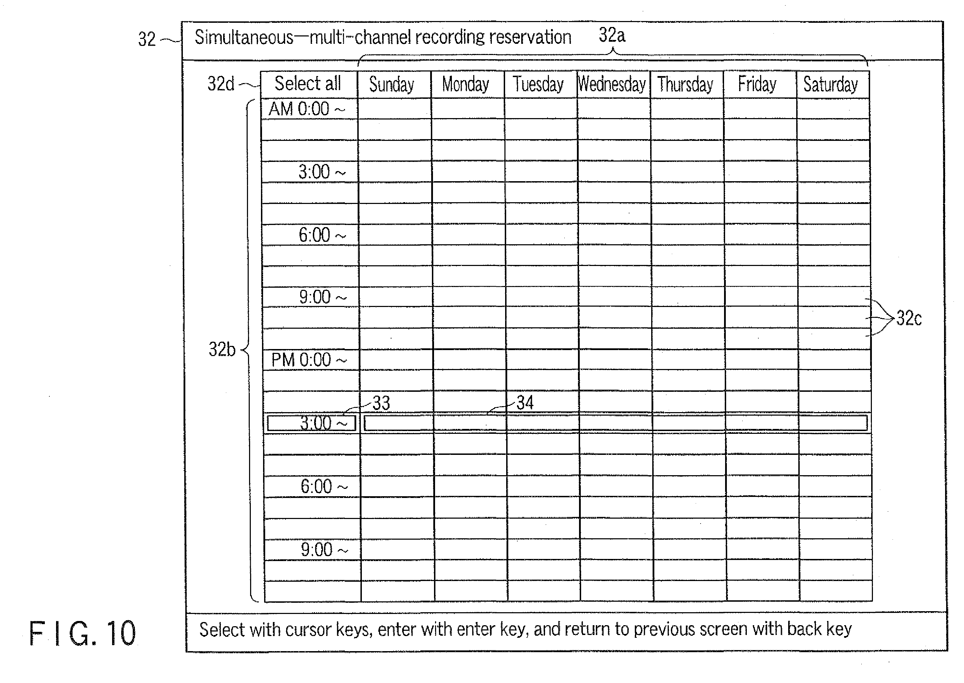

Next, on the simultaneous multi-channel recording reservation screen 32, the user can move the cursor 33 to a desired one (e.g., one hour from 3:00 p.m. in FIG. 10) of twenty four unit time bands displayed on the time area 32b, by selectively operating the cursor up, down, left, and right keys 25e to 25h of the remote controller 25, as shown in FIG. 10. That is, a desired unit time band can be selected by a user's operation.

In this case, all the cells 32c corresponding to the unit time band (one hour from 3:00 p.m.) selected by the cursor 33, namely, seven cells 32c respectively corresponding to seven days of the week are selected by the select frame 34. When the user operates the enter key 25i of the remote controller 25 in this state, a recording reservation of simultaneous multi-channel recording is set for a unit time band (one hour from 3:00 p.m.) on days (all seven days), which correspond to the cells 32c selected by the select frame 34.

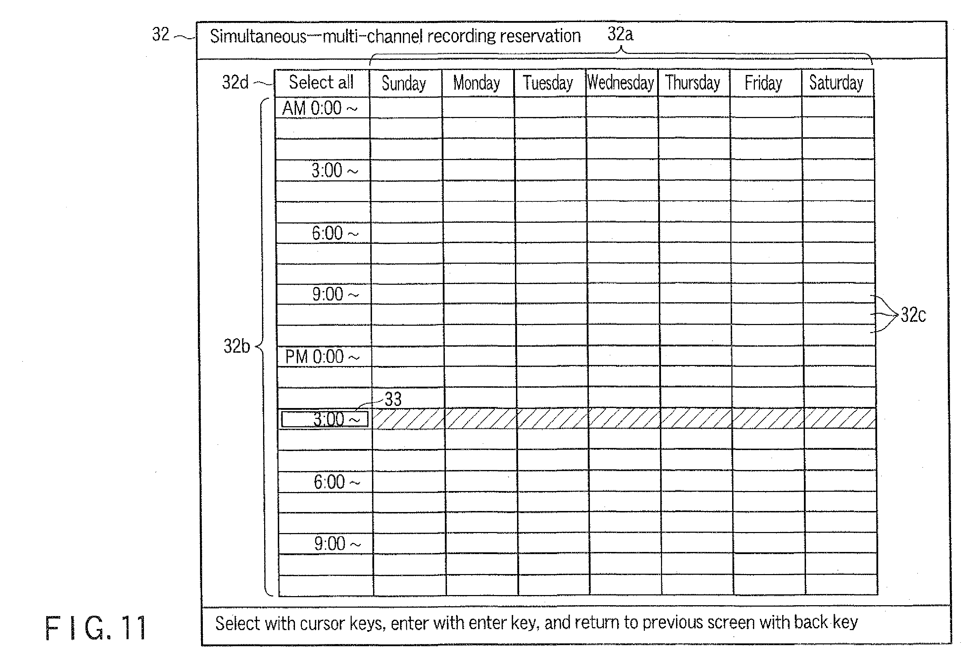

Also in this case, the cells 32c corresponding to the unit time band on the days, for which the recording reservation has been set, are displayed in the color (hatched in FIG. 11) indicating that a recording reservation has been set, as shown in FIG. 11, to be distinguishable from the other cells 32c.

That is, the user can set a recording reservation of simultaneous multi-channel recording for a desired unit time band on all days, by selecting the desired unit time band from the twenty-four unit time bands displayed on the time area 32b by using the remote controller 25.

The user can set a recording reservation of simultaneous multi-channel recording in units of unit time bands as described above for not only one unit time band but also a plurality of unit time bands by repeating the operation of selecting a desired one of twenty-four unit time bands displayed on the time area 32b by using the remote controller 25.

days for which a recording reservation has already been set (e.g., cells 32c displayed in the color indicating that a recording reservation has been set) and days for which no recording reservation has been set (cells 32c displayed in the color indicating that no recording reservation is set) are mixed in the unit time band selected by the cursor 33, a recording reservation is set for all those days, as indicated by the hatching in FIG. 11, by selecting the enter key 25i of the remote controller 25. Specifically, seven cells 32c corresponding to the unit time band on all the seven days are displayed in the color indicating that a recording reservation has been set.

Further, with use of the remote controller 25, the user can select, by the cursor 33, the unit time band on which cells 32c corresponding to all the seven days are displayed in the color indicating that a recording reservation has been set, namely, the unit time band on which a recording reservation has been set for all the seven days. The user can then operate the enter key 25i.

Then, the recording reservation set for the unit time band on all the seven days can be cancelled as shown in FIG. 10. Further, cells 32c corresponding to the unit time band on all the seven days for which the recording reservation has been cancelled are displayed in the original color indicating that no recording reservation has been set.

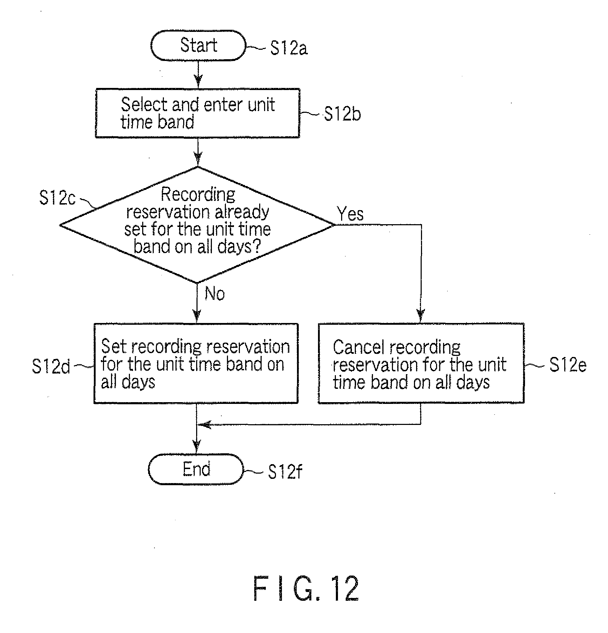

FIG. 12 shows a flowchart which summarizes a processing operation for setting and releasing a recording reservation of simultaneous multi-channel recording in units of unit time bands as described above. At first, the processing is started (step S12a), and a desired unit time band is selected and entered by the user in step S12b. The recording reservation setting controller 23c determines whether a recording reservation has already been set for the unit time band on all the seven days or not, in a step S12c.

If no recording reservation is determined to have been set for the unit time band on any of all the seven days (NO), the recording-reservation-setting controller 23c sets a recording reservation for the unit time band on all the seven days, in step S12d, and terminates the processing (step S12f). Otherwise, if a recording reservation is determined to have been set for the unit time band on all the seven days (YES), the recording-reservation-setting controller 23c cancels the recording reservation in the unit time band on all the seven days in step S12e, and terminates the processing (step S12f).

According to the example of setting a recording reservation as described with reference to FIGS. 10, 11, and 12, a desired recording reservation set can be set and cancelled for a unit time band on all the seven days by selecting the unit time band. Therefore, operations of setting and cancelling a recording reservation can be easily performed. Accordingly, a recording reservation of simultaneous multi-channel recording can be set and cancelled with a high degree of freedom by an easy operation. Handling becomes convenient for users.

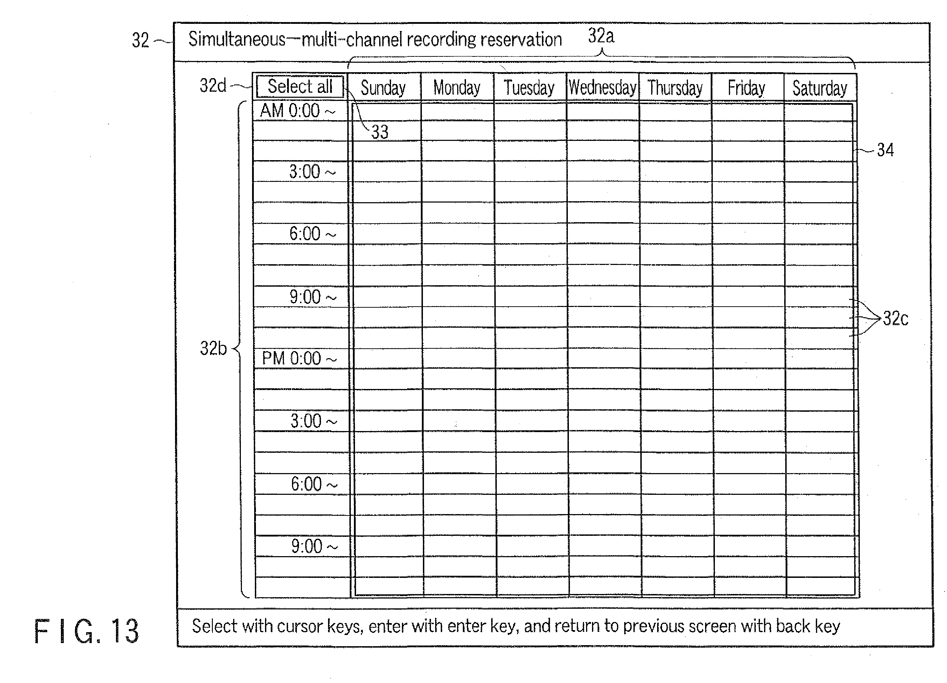

Next, on the simultaneous-multi-channel-recording reservation screen 32, the user can move the cursor 33 to the select-all area 32d described previously by selectively operating the cursor up, down, left, and right keys 25e to 25h of the remote controller 25, as shown in FIG. 13. That is, the select-all area 32d can be selected by a user's operation.

In this case, all the cells 32c that can be specified by the seven days and twenty-four unit time bands are selected by a select frame 34. When the user operates the enter key 25i of the remote controller 25 in this state, a recording reservation of simultaneous multi-channel recording is set for unit time bands (24 hours from 0:00 a.m.) and days (all seven days) which correspond to all the cells 32c selected by the select frame 34.

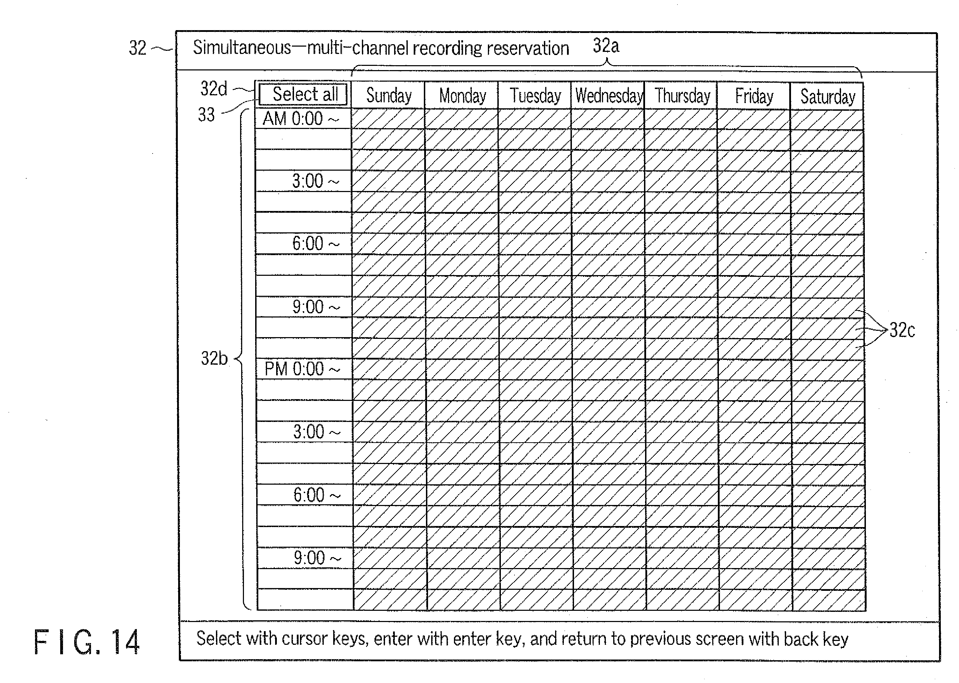

Also in this case, the cells 32c corresponding to the unit time bands on the days, for which the recording reservation has been set, are displayed in the color (hatched in FIG. 14) indicating that a recording reservation has been set, as shown in FIG. 14. Specifically, the user can set a recording reservation of simultaneous multi-channel recording for all the unit time bands on all the days by selecting the select-all area 32d with use of the remote controller 25.

If unit time bands on days, for which a recording reservation has already been set (e.g., cells 32c displayed in the color indicating that a recording reservation has been set), and unit time bands on days, for which no recording reservation has been set (cells 32c displayed in the color indicating that no recording reservation is set) exist mixed with each other when the select-all area 32d is selected by the select cursor 33, a recording reservation is set for all the unit time bands on all the days by selecting the enter key 25i of the remote controller 25. Specifically, the cells 32c corresponding to all the unit time bands on all the days are displayed in the color indicating that a recording reservation has been set.

In a state in which the cell 32cs corresponding to all the unit time bands on all the days are displayed in the color indicating that a recording reservation has been set, as hatched in FIG. 14, namely, in a state in which a recording reservation has been set for all the unit time bands on all the days, the user can cancel the receding reservation, as shown in FIG. 13, by selecting the select-all area 32d by the cursor 33 with use of the remote controller 25 and by further operating the enter key 25i. Then, the cells 32c corresponding to all the unit time bands on all the days for which the recording reservation has been cancelled are displayed in the original color indicating that no recording reservation is set.

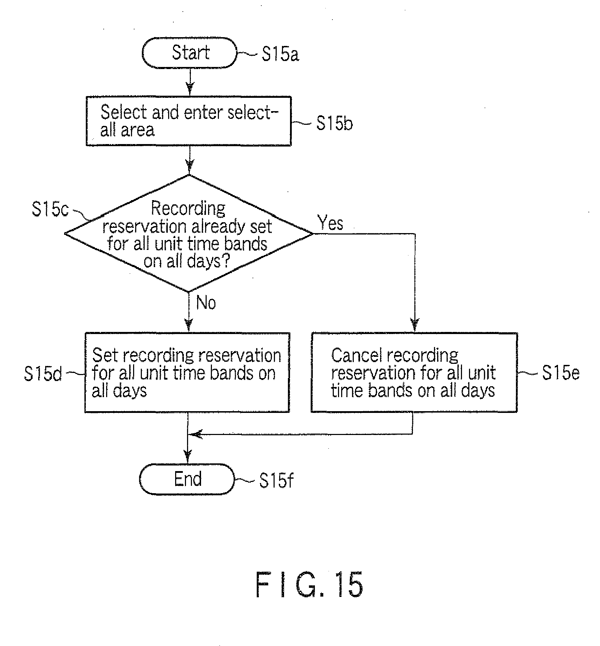

FIG. 15 shows a flowchart which summarizes a processing operation for setting and cancelling a recording reservation of simultaneous multi-channel recording by using the select-all area 32d as described above. Specifically, the processing is started (step S15a), and in step S15b, the user selects and enters the select-a11 area 32d. Then in step S15c, the recording-reservation-setting controll unit 23c determines whether a recording reservation has already been set for all the unit time bands on all the days or not.

If no recording reservation is determined to have been set for any of all the unit time bands on all the days (NO), the recording-reservation-setting controll unit 23 sets a recording reservation for all the unit time bands on all the days (step S15d), and terminates the processing (step S15f). Otherwise, if any recording reservation is determined to have been set for all the unit time bands on all the days in the step S15c (YES), the recording-reservation-setting control unit 23c cancels the recording reservation set for all the unit time bands on all the days in the step S15e, and terminates the processing (step S15f).

According to the setting example described with reference to FIGS. 13, 14, and 15, a recording reservation can be set and cancelled for all the unit time bands on all the days. Therefore, a recording reservation can be easily set and cancelled. Accordingly, a recording reservation of simultaneous multi-channel recording can be set and cancelled with a high degree of freedom by an easy operation, and handling becomes convenient for users.

Next, on the simultaneous-multi-channel recording reservation screen 32, the user can copy a setting pattern of a recording reservation for unit time bands (24 hours from 0:00 a.m.) on a desired day selected firstly, to unit time bands on another day, by selecting firstly the desired day with use of the remote controller 25 and operating the blue color key 25m, and by thereafter selecting another day and operating the blue color key 25m.

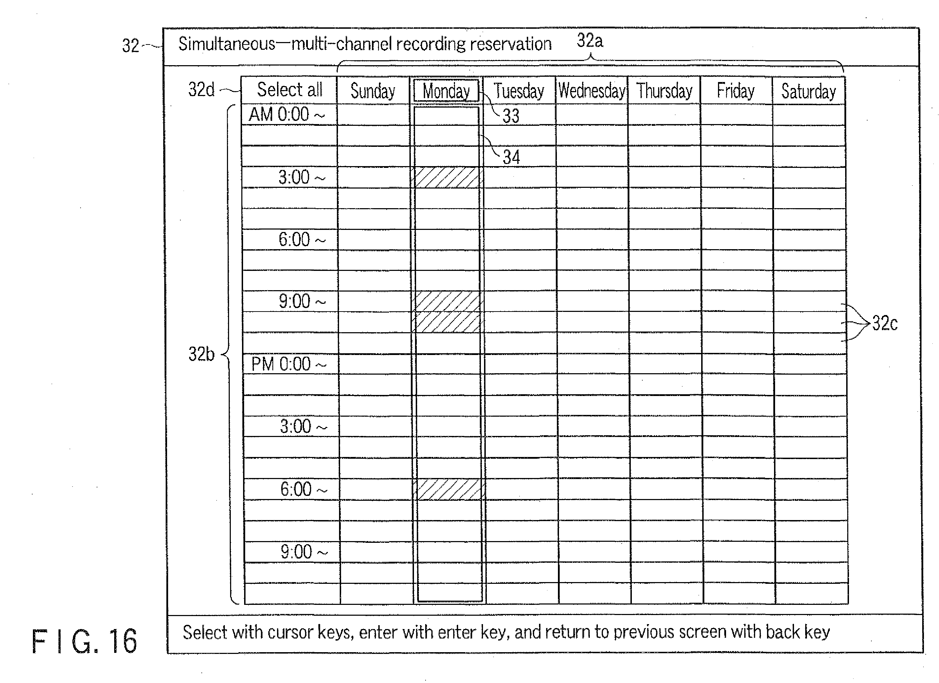

Specifically, the user moves the cursor 33 firstly to a desired day (Monday in FIG. 16) by using the remote controller 25, as shown in FIG. 16. Then, all the cells corresponding to the day (Monday) selected by the cursor 33 are selected, as has been described above, i.e., twenty four cells 32c representing the twenty-four unit time bands are selected by the select frame 34.

At this time, a total of four cells 32c including one cell 32c corresponding to one hour from 3:00 a.m., two cells 32c corresponding to two hours from 9:00 a.m., and one cell 32c corresponding to one hour from 6:00 p.m. are supposed to be displayed in the color indicating that a reservation has been set, as indicated by the hatching in FIG. 16. That is, there is supposed to be a setting pattern of recording reservations for unit time bands corresponding to the foregoing four cells 32c on Monday.

When the user operates the blue color key 25m of the remote controller 25 in this state, the recording-reservation-setting controller 23c stores the setting pattern of recording reservations on Monday.

Thereafter, the user moves the cursor 33 to another day (for example, Friday) by the remote controller 25. Then, as described previously, all the cells 32c corresponding to the day (Friday) selected by the cursor 33, which are twenty four cells 32c representing twenty-four unit time bands, are selected by the select frame 34.

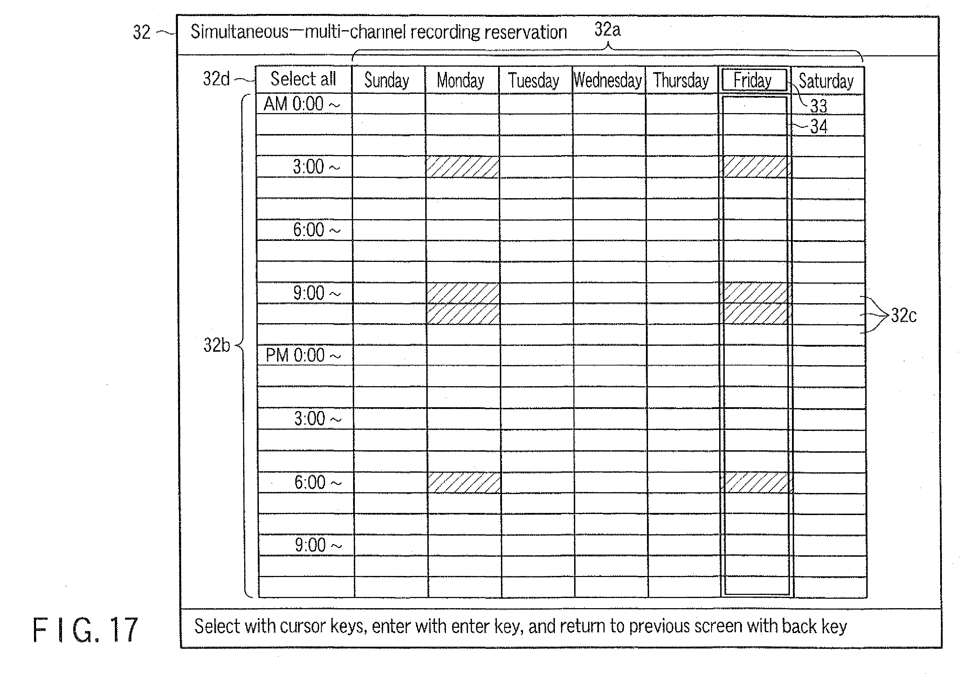

When the user operates the blue color key 25m of the remote controller 25 in this state, a total of four cells 32c, which include one cell 32c corresponding to one hour from 3:00 a.m., two cells 32c corresponding to two hours from 9:00 a.m., and one cell 32c corresponding to one hour from 6:00 p.m. among the twenty four cells 32c on Friday, are then displayed in the color indicating that a recording reservation has been set, as hatched in FIG. 17. Specifically, the setting pattern of recording reservations on Monday is pasted on all the cells 32c on Friday.

In this case, recording reservations which have been set for unit time bands on Friday before copying are rewritten with the setting pattern of recording reservations on Monday.

According to the example of setting a recording reservation as described with reference to FIGS. 16 and 17, a setting pattern of recording reservations on a desired day can be copied to another day. Therefore, the user can easily carry out a setting operation for a recording reservation. Accordingly, a recording reservation of simultaneous multi-channel recording can be set and cancelled with a high degree of freedom by an easy operation, and handling becomes convenient for users.

Next, on the simultaneous-multi-channel recording reservation screen 32, the user can copy a setting pattern of recording reservations for a desired unit time band selected firstly, to another unit time band, by firstly selecting the desired unit time band from the time area 32b with use of the remote controller 25 and operating the blue color key 25m and by thereafter selecting the other unit time band and operating the blue color key 25m.

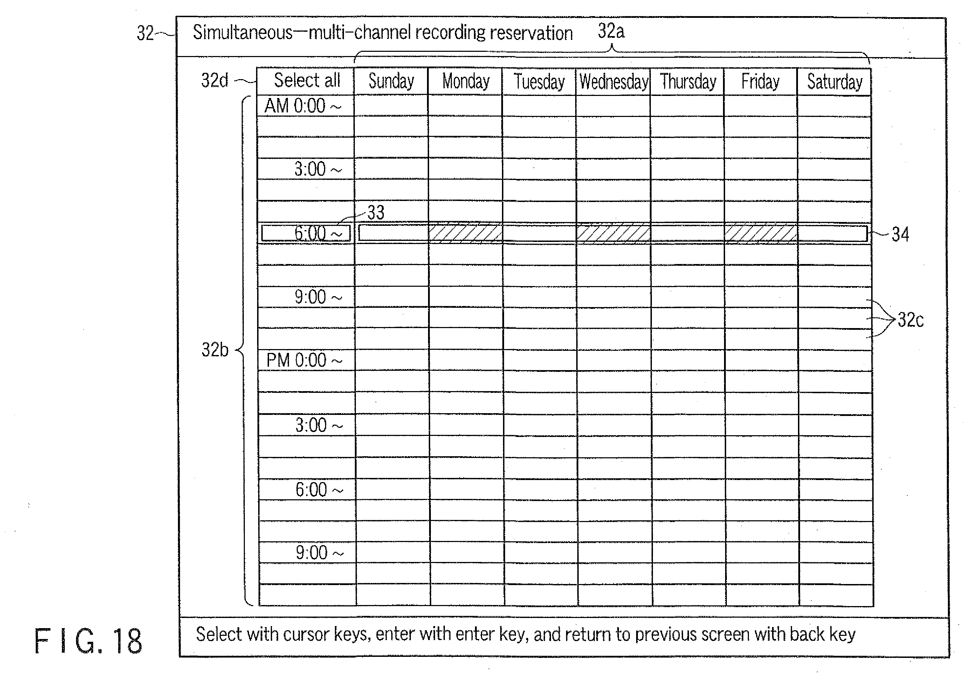

Specifically, the user moves the cursor 33 to a desired unit time band (one hour from 6:00 a.m. in FIG. 18) by using the remote controller 25, as shown in FIG. 18. Then, all the cells corresponding to the unit time band selected by the cursor 33 are selected, as has been described above, i.e., cells 32c for seven days are selected by the select frame 34.

At this time, a total of three cells 32c, which include one cell 32c corresponding to Monday, one cell 32c corresponding to Wednesday, and one cell 32c corresponding to Friday among seven cells 32c corresponding to the desired unit time band (one hour from 6:00), are supposed to be displayed in the color indicating that a reservation has been set, as indicated by the hatching in FIG. 18. That is, there is supposed to be a setting pattern of recording reservations for a unit time band of one hour from 6:00 a.m. on days corresponding to the foregoing three cells 32c.

When the user operates the blue color key 25m of the remote controller 25 in this state, the recording-reservation-setting controller 23c stores a setting pattern of recording reservations in the unit time band of one hour from 6:00.

Thereafter, the user moves the cursor 33 to another unit time band (for example, one hour from 3:00 p.m.) by the remote controller 25. Then, as described previously, all the cells 32c corresponding to the unit time band (one hour from 3:00 p.m.) selected by the cursor 33, which are cells 32c for seven days, are selected by the select frame 34.

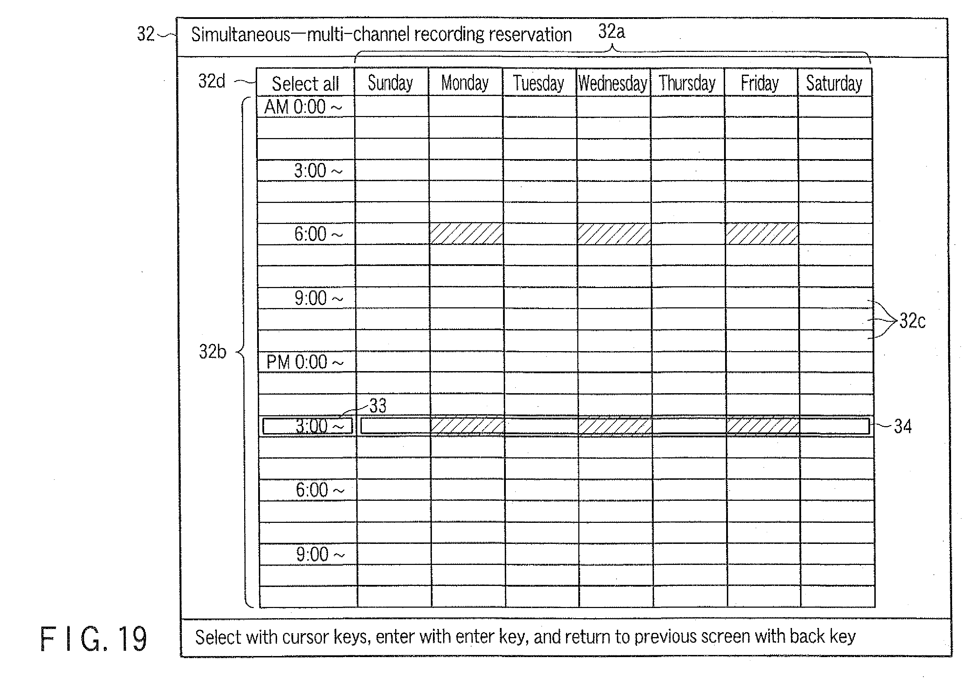

When the user operates the blue color key 25m of the remote controller 25 in this state, a total of three cells 32c, which include one cell 32c corresponding to Monday, one cell 32c corresponding to Wednesday, and one cell 32c corresponding to Friday among seven cells 32c corresponding to the desired unit time band (one hour from 6:00 a.m.), are then displayed in the color indicating that a recording reservation has been set, as hatched in FIG. 19. Specifically, the setting pattern of recording reservations in the unit time band of one hour from 6:00 a.m. is pasted on and copied to all the cells 32c corresponding to the unit time band of one hour from 3:00 p.m.

In this case, a recording reservation which has been set for the unit time band of one hour from 3:00 p.m. before copying is rewritten with the setting pattern of the recording reservation on the unit time band of one hour from 6:00 a.m.

According to the example of setting a recording reservation as described with reference to FIGS. 18 and 19, a setting pattern of recording reservations on a desired unit time band can be copied to another unit time band. Therefor, the user can easily carry out a setting operation for a recording reservation. Accordingly, a recording reservation of simultaneous multi-channel recording can be set and cancelled with a high degree of freedom by an easy operation, and handling becomes convenient for users.

The above embodiment has been described with reference to the digital-television-broadcast receiving apparatus 11 as an example. The embodiment is not limited to this example but is widely applicable to, for example, a set top box (STB) and an optical disc recording/reproducing apparatus having a digital-television-broadcast receiving function.

The embodiment has also been described with reference to receiving and simultaneous recording of broadcast programs on a plurality of channels in digital television broadcasting. However, the embodiment is not limited to the digital television broadcasting but is applicable to receiving and simultaneous recording of programs on a plurality of channels, which are distributed through a network, for example.

In the above embodiment, the cursor 33 and select frame 34 each displayed on the screen are expressed to have a form of a frame. However, the embodiment is not limited to this form but may employ various expression methods, e.g., a method of displaying some part of the screen in a different color from the other parts.

## Claims

1. A recording reservation setting apparatus comprising:
a creation unit (23c) configured to create a recording reservation screen (32) displayed in the form of a matrix with an axis (32a) along which days are arrayed and another axis (32b) which represents time divided into predetermined time bands;
a setting unit (23c) configured to set a recording reservation for a day and a time band corresponding to a unit area (32c), by selecting the unit area (32c) specified by the day and the time band on the recording reservation screen (32) created by the creation unit (23c); and
a recording unit (12 to 16, 23, 27) configured to receive and simultaneously record programs distributed through a plurality of channels, based on the recording reservation set by the setting unit (23c).

2. The recording reservation setting apparatus of Claim 1, **characterized in that**
the setting unit (23c) is configured to cancel the recording reservation based on the day and the time band corresponding to the selected unit area (32c) when the unit area (32c) corresponding to the day and time band for which the recording reservation has been set is selected.

3. The recording reservation setting apparatus of Claim 1 or 2, **characterized in that**
the setting unit (23c) is configured to set a recording reservation for all the time bands on a selected day when the day is selected on the recording reservation screen (32) created by the creation unit (23c), and to cancel the recording reservation for all the time bands on the selected day when the day for which the recording reservation for all the time bands has been set is selected.

4. The recording reservation setting apparatus of one of Claims 1 to 3, **characterized in that**
the setting unit (23c) is configured to set a recording reservation for all the days in a selected time band when the time band is selected on the recording reservation screen (32) created by the creation unit (23c), and to cancel the recording reservation for all the days in the selected time band when the time band in which the recording reservation for all the days has been set is selected.

5. The recording reservation setting apparatus of one of Claims 1 to 4, **characterized in that**
the creation unit (23c) displays an operation area (32d) for setting a recording reservation for all the time bands on all the days, on the recording reservation screen (32), and
the setting unit (23c) is configured to set a recording reservation for all the time bands on all the days when the operation area (32d) is selected on the recording reservation screen (32) created by the creation unit (23c), and to cancel the recording reservation for all the time bands on all the days when the operation area (32d) is selected in a state in which the recording reservation for all the time bands on all the days is set.

6. The recording reservation setting apparatus of one of Claims 1 to 5, **characterized in that**
the setting unit (23c) is configured to store a recording reservation pattern for all the time bands on a day selected on the recording reservation screen (32) created by the creation unit (23c), and to copy the stored recording reservation pattern to another day.

7. The recording reservation setting apparatus of one of Claims 1 to 6, **characterized in that**
the setting unit (23c) is configured to store a recording reservation pattern for all the days on a time band selected on the recording reservation screen (32) created by the creation unit (23c), and to copy the stored recording reservation pattern to another time band.

8. The recording reservation setting apparatus of one of Claims 1 to 7, **characterized by** further comprising
a display unit (20) configured to display the recording reservation screen (32) created by the creation unit (23c).

9. A recording reservation setting method **characterized by** comprising:
creating a recording reservation screen (32) displayed in the form of a matrix with an axis (32a) along which days are arrayed and another axis (32b) which represents time divided into predetermined time bands;
setting a recording reservation for a day and a time band corresponding to a unit area (32c), by selecting the unit area (32c) specified by the day and the time band on the created recording reservation screen (32); and
receiving and simultaneously recording programs distributed through a plurality of channels, based on the set recording reservation.
